# EUROPEAN PATENT APPLICATION

(11) **EP 3 319 335 A1**
(43) Date of publication of application: **09.05.2018**
(21) Application number: 16817984.4
(22) Date of filing: 29.06.2016
(51) Int. Cl.: H04R 1/34, H04N 5/64, H04R 1/02, H04R 1/26, H04R 5/02

(54) **SPEAKER SYSTEM, DISPLAY DEVICE, AND TELEVISION RECEIVER**

(30) Priority: 30.06.2015 JP 2015132058; 30.06.2015 JP 2015132059; 30.06.2015 JP 2015132060; 24.03.2016 JP 2016060860
(71) Applicant: Sharp Kabushiki Kaisha, Sakai City, Osaka 590-8522 (JP)
(72) Inventor: MINODA, Hidenori, Sakai City, Osaka 590-8522 (JP); HAYASE, Tohru, Sakai City, Osaka 590-8522 (JP); TANAKA, Hideaki, Sakai City, Oska 590-8522 (JP); OJIMA, Yoshihiro, Sakai City, Osaka 590-8522 (JP)
(74) Representative: Müller Hoffmann & Partner
(86) International application number: PCT/JP2016/069331
(87) International publication number: WO 2017/002876

(57) **Abstract**

A speaker system that can form an optimal sound field in a wide range, that easily promotes a reduction in size (slimming down), and that hardly causes a deterioration in sound quality even when used as a television set is provided. A speaker system (100) includes two speakers (120) having sound output surfaces opposing to one another. The speaker system (100) includes a diffuser (110) between the two speakers (120). The diffuser (110) reflects sound emitted by the two speakers (120) inward of a specific half space.

## Description

### Technical Field

The present invention relates to a speaker system, and a display device including the speaker system.

### Background Art

Conventionally, a speaker system is formed by arranging two direct-radiator speakers in parallel to one another so that sound output surfaces (that is, diaphragms forming the speakers) face in the same direction (also merely described as being arranged left and right). Such a conventional speaker system can form optimal sound fields at positions at equal distances from the corresponding speakers arranged left and right; however, the system cannot form the optimal sound fields at positions deviated from the positions at the equal distances from the two speakers.

Owing to this, in recent years, there is suggested a speaker device (opposite-arrangement speaker device) including a pair of speaker units having sound output surfaces opposing to one another, and reflecting members that reflect the sound emitted by the speaker units in directions in which an audience is present.

For example, PTL 1 discloses an omnidirectional speaker device in which waveguides reflect the sound emitted by a tweeter and the sound emitted by a pair of midrange drivers in all directions. Also, PTL 2 discloses a speaker system with low directivity (speaker system in Fig. 9 in PTL 2) in which reflectors reflect the sound emitted by a pair of speakers inward of a specific space.

These speaker devices each can form an optimal sound field in a wide peripheral range. Hence, even when many audiences are present in the periphery of the speaker device, the audiences can hear sound with high sound quality.

Also, the speaker system in PTL 2 is suitable for use as a television speaker system. Even when a user places the speaker system in PTL 2 at each of left and right of a television set to use the speaker system as a television speaker system and causes the speaker system to output sound, the reflectors arranged to surround the pair of speakers reduce a deterioration in sound quality which may occur when the sound propagates to the rear surface side of the television set.

### Citation List

### Patent Literature

PTL 1: Japanese Patent No. 5662462 (issued on January 28, 2015)
PTL 2: Japanese Unexamined Patent Application Publication No. 2014-107751 (published on June 9, 2014)

### Summary of Invention

### Technical Problem

However, the speaker device in PTL 1 and the speaker system in PTL 2 have the following problems.

That is, when a user places the speaker device in PTL 1 at each of left and right of the television set to use the speaker device as the television speaker and causes the speaker device to output sound, a deterioration in sound quality which may occur when the sound propagates to the rear surface side of the television set likely occurs.

In contrast, in the speaker system in PTL 2, the above-described deterioration in sound quality unlikely occurs; however, since the reflectors are arranged to surround the pair of speaker units, a reduction in size (sliming down) of the speaker system is hardly promoted.

Also, as it is clear from paragraph [0010] in PTL 1, the speaker device in PTL 1 outputs high-directivity sound in a range from 3 kHz to 8 kHz from both the tweeter and midrange drivers. In the speaker device in PTL 1, a waveguide that reflects the sound emitted by the tweeter and a pair of waveguides that reflect the sound emitted by the pair of midrange drivers are provided at positions separated from one another.

Hence, the speaker device in PTL 1 may have a problem in which "some of audiences may feel uncomfortable when the audiences hear high-directivity sound with the same content in two different directions."

Also, in the speaker system in PTL 2, since the reflectors are arranged to surround the pair of speaker units, a reduction in size (sliming down) of the speaker system is hardly promoted.

The present invention is made to address the above-described problems, and main objects may be (1) to provide a speaker system that can form an optimal sound field in a wide range, easily promotes a reduction in size (slimming down), and hardly causes a deterioration in sound quality even when used as a television speaker system; (2) to provide a speaker system that allows an audience to hear the sound emitted by a speaker group including a pair of opposite speakers without giving the audience uncomfortable feeling; and (3) to provide a speaker system that can form an optimal sound field in a wide range, can attain a reduction in size (slimming down), and hardly causes a deterioration in sound quality even when used as a television speaker system.

### Solution to Problem

To address the above-described problems, a speaker system according to an aspect of the present invention including a first speaker having a sound output surface, and a second speaker having a sound output surface, the sound output surfaces opposing to one another, includes a diffuser that is provided between the first speaker and the second speaker and that reflects sound emitted by the first speaker and the second speaker. The diffuser reflects the sound emitted by the first speaker and the second speaker, inward of a specific half space.

To address the above-described problems, a speaker system according to another aspect of the present invention including a first speaker having a sound output surface, and a second speaker having a sound output surface, the sound output surfaces opposing to one another, includes a diffuser that is provided between the first speaker and the second speaker and that reflects sound emitted by the first speaker and the second speaker. The diffuser includes a third speaker.

To address the above-described problems, a speaker system according to still another aspect of the present invention includes a first speaker having a sound output surface, and a second speaker having a sound output surface, the sound output surfaces opposing to one another; and a wall-shaped coupling member that is provided between a first enclosure portion in which the first speaker is disposed and a second enclosure portion in which the second speaker is disposed and that couples the first enclosure portion with the second enclosure portion.

### Advantageous Effects of Invention

The speaker system according to any one of the aspects of the present invention can form an optimal sound field in a wide range, easily promotes a reduction in size (slimming down), and hardly causes a deterioration in sound quality even when used as a television speaker system.

Further, according to any one of the aspects of the present invention, an advantageous effect of allowing an audience to hear the sound emitted by a speaker group including a pair of opposite speakers without giving the audience uncomfortable feeling.

### Brief Description of Drawings

[Fig. 1] Fig. 1 provides a set of illustrations including a plan view, a right side view, a left side view, and a front view of a speaker system according to first and second embodiments of the present invention.
[Fig. 2] Fig. 2 provides perspective views of the speaker system according to the first and second embodiments of the present invention.
[Fig. 3] Fig. 3 provides other perspective views of the speaker system according to the first and second embodiments of the present invention.
[Fig. 4] Fig. 4 provides a set of six side views illustrating a diffuser included in the speaker system according to the first and second embodiments of the present invention.
[Fig. 5] Fig. 5 is a perspective view of the diffuser included in the speaker system according to the first and second embodiments of the present invention.
[Fig. 6] Fig. 6 provides various cross-sectional views of the diffuser included in the speaker system according to the first and second embodiments of the present invention.
[Fig. 7] Fig. 7 provides illustrations for explaining the positional relationship between two speaker systems and a casing of a display panel in a television receiver provided with the speaker systems according to the first and second embodiments of the present invention at left and right of the casing of the display panel.
[Fig. 8] Fig. 8 provides illustrations for explaining structures around diffusers in speaker systems according to various embodiments of the present invention.
[Fig. 9] Fig. 9 is an illustration schematically illustrating the appearance of a speaker system according to another embodiment of the present invention.
[Fig. 10] Fig. 10 is an illustration schematically illustrating the appearance of a speaker system according to still another embodiment of the present invention.
[Fig. 11] Fig. 11 is an illustration for explaining directivity of a speaker system.
[Fig. 12] Fig. 12 is a schematic block diagram of a driving control unit of the speaker system illustrated in Fig. 10.
[Fig. 13] Fig. 13 illustrates the correlation between the source genre and the output proportions of speakers. Description of Embodiments

### [First Embodiment]

A speaker system according to this embodiment, and a television receiver according to this embodiment provided with such a speaker system at each of left and right (periphery) of a display screen are described below with reference to the drawings.

### (Configuration of Speaker System)

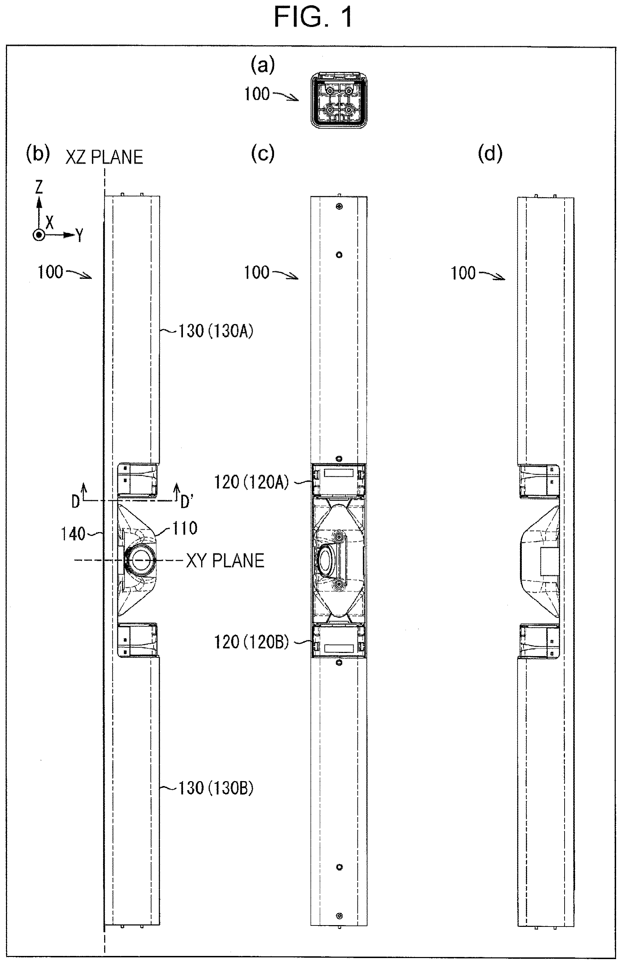

A configuration of a speaker system according to this embodiment is described first with reference to Figs. 1 to 3.

Fig. 1 provides a set of illustrations including a plan view, a right side view, a left side view, and a front view of a speaker system 100 according to this embodiment. Specifically, Fig. 1(a) is a plan view of the speaker system 100, Fig. 1(b) and Fig. 1(d) are left and right side views of the speaker system 100, and Fig. 1(c) is a front view of the speaker system 100.

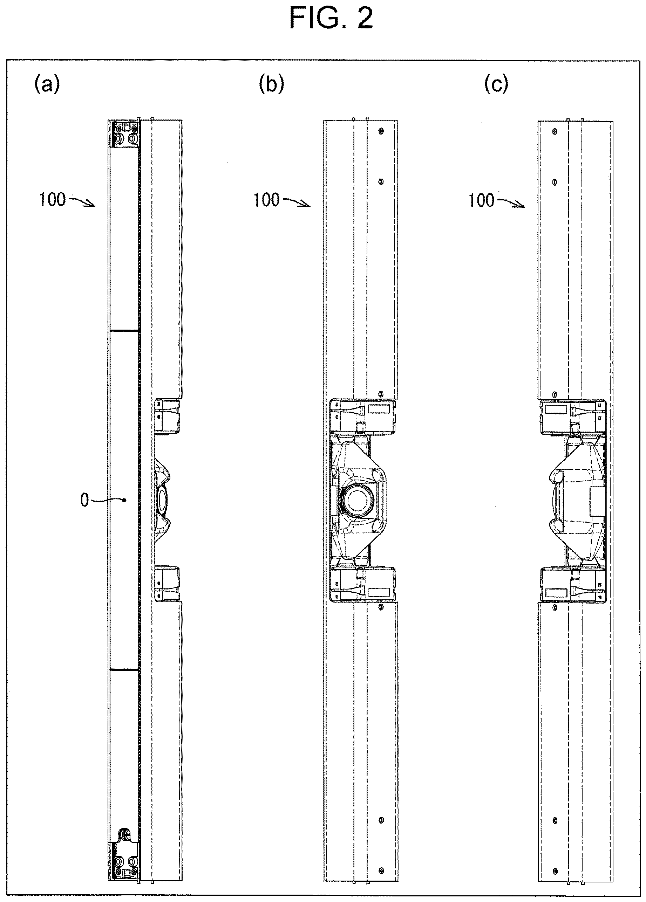

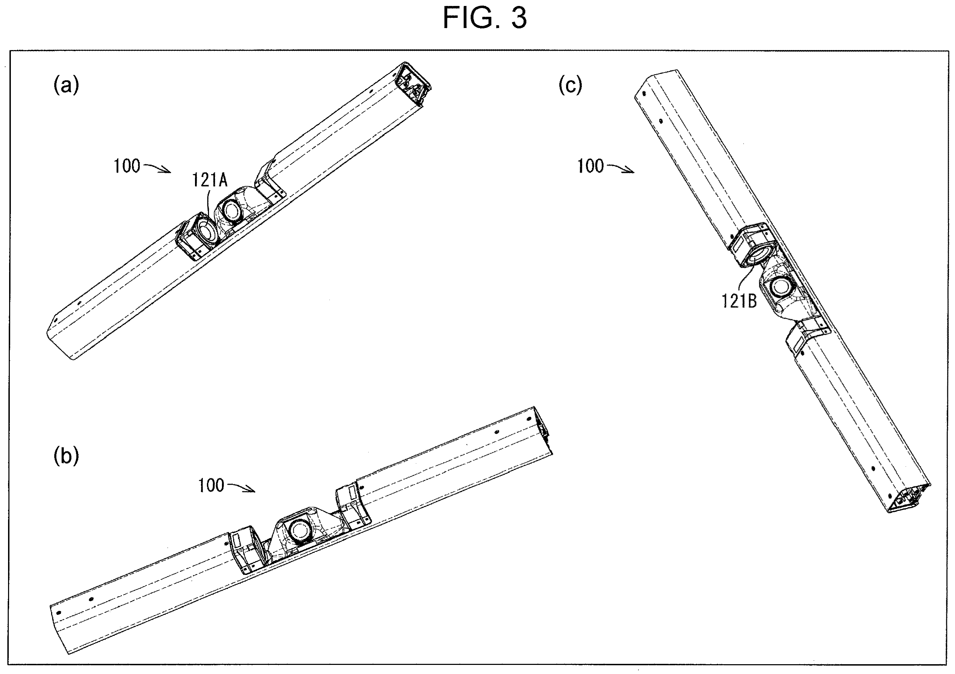

Figs. 2 and 3 provide perspective views of the speaker system 100. The point O in Fig. 2(a) represents the position of the origin in the XYZ space coordinate system (space coordinate system in which X axis, Y axis, and Z axis orthogonal to one another are defined) illustrated in Fig. 1(b).

As it is found in Figs. 1 to 3, the speaker system 100 includes two opposite speakers 120 (first speaker 120A, and second speaker 120B) having sound output surfaces (sound output surface 121A of first speaker 120A, and sound output surface 121B of second speaker 120B) opposing to one another.

The two speakers 120 are speaker units that are connected to the same amplifier (not illustrated) and that emit the same sound. In this embodiment, the two speakers 120 are midrange-bass output speakers (mid-bass speakers). However, the two speakers 120 may be any other type of speakers (for example, tweeters, squawkers, mid-high speakers, etc.).

The speaker system 100 includes a diffuser (acoustic diffuser) 110 that reflects the sound emitted by the first speaker 120A and the sound emitted by the second speaker 120B inward of a specific half space. In this case, the specific half space represents a half space composed of an almost unlimited number of coordinates in which the Y coordinate values are positive in the aforementioned XYZ space coordinate system.

As it is found in Fig. 1(b), in the space expressed by the aforementioned XYZ space coordinate system (in the space in which a position in the space is expressed by a coordinate value of the aforementioned XYZ space coordinate system), the first speaker 120A, the second speaker 120B, and the diffuser 110 are arranged side by side along the Z axis (first axis) in the order of the first speaker 120A, the diffuser 110, and the second speaker 120B.

Also, the speaker system 100 includes two enclosure portions 130 (a first enclosure portion 130A in which the first speaker 120A is disposed, and a second enclosure portion 130B in which the second speaker 120B is disposed). As it is found in Fig. 1(b), Fig. 1(d), and Fig. 2(a), the speaker system 100 includes a wall-shaped (in this embodiment, angular C-shaped) coupling member 140 that is arranged between the two enclosure portions 130 and couples the first enclosure portion 130A with the second enclosure portion 130B.

The diffuser 110 is attached to the coupling member 140.

A sound-absorbing material may be attached to the inside of the angular C shape of the angular C-shaped coupling member 140, or the entirety or part of the coupling member 140 may be formed of a sound-absorbing material.

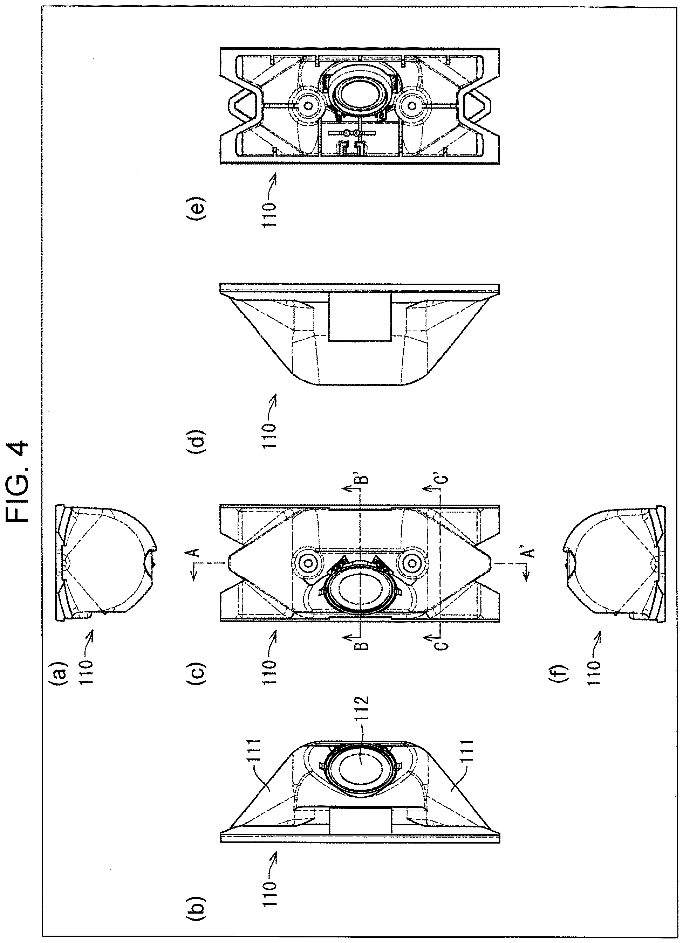

The structure of the diffuser 110 is described below in detail further with reference to Figs. 4 to 6.

Fig. 4 provides a set of six side views illustrating the diffuser 110 included in the speaker system 100.

Specifically, Fig. 4(a), Fig. 4(b), and Fig. 4(c) are respectively a plan view, a right side view, and a front view. Fig. 4(d), Fig. 4(e), and Fig. 4(f) are respectively a left side view, a rear view, and a bottom view.

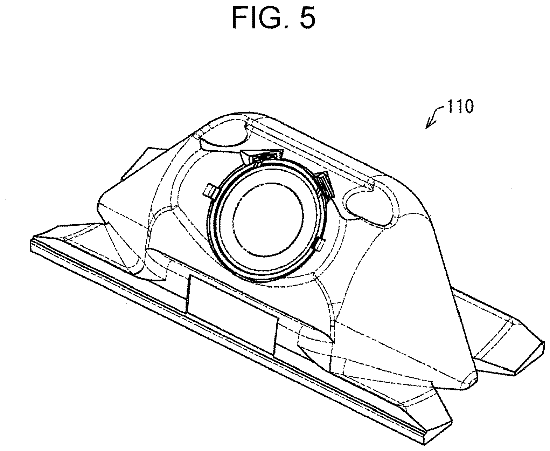

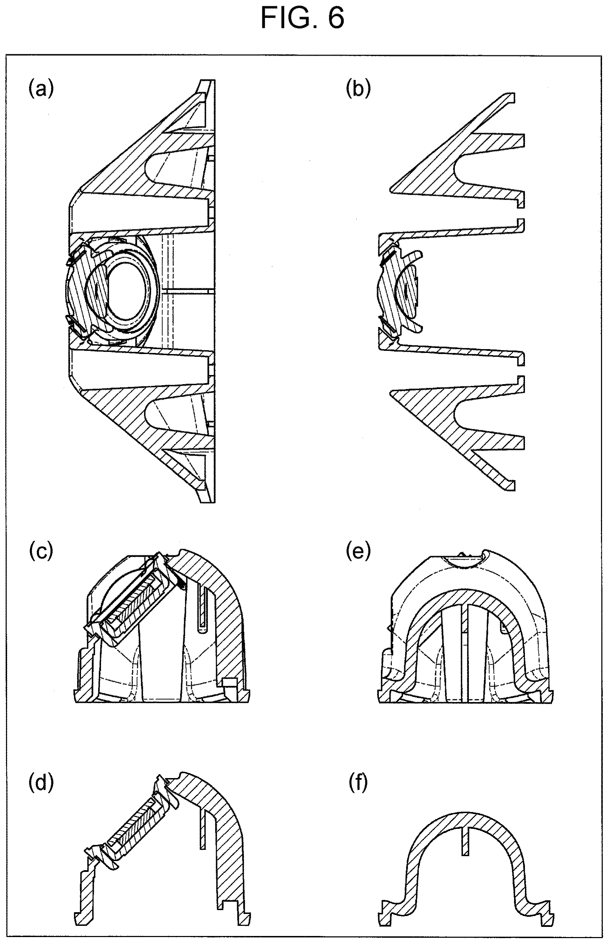

Fig. 5 is a perspective view of the diffuser 110. Also, Fig. 6 provides various cross-sectional views of the diffuser 110.

Specifically, Fig. 6(a) and 6(b) are respectively a cross-sectional view taken along line A-A' and a cross-sectional view of a cut portion taken along line A-A'. Fig. 6(c) and 6(d) are respectively a cross-sectional view taken along line B-B' and a cross-sectional view of a cut portion taken along line B-B'. Fig. 6(e) and 6(f) are respectively a cross-sectional view taken along line C-C' and a cross-sectional view of a cut portion taken along line C-C'.

As it is found in Figs. 1, 4, and 5, the diffuser 110 has a shape being symmetric (substantially symmetric) with respect to an XY plane (plane perpendicular to first axis) as a symmetry plane. As illustrated in Figs. 1 and 3, the symmetry plane is a plane at substantially equal distances from the sound output surface 121A of the first speaker 120A and from the sound output surface 121B of the second speaker 120B. Alternatively, the symmetry plane may be a plane at completely equal distances from both the sound output surfaces. Also, the diffuser 110 may have a shape being completely symmetric with respect to the XY plane (plane perpendicular to first axis) as the symmetry plane.

Also, as it is found in Figs. 4 to 6, the diffuser 110 includes a speaker 112. Specifically, as it is found in Fig. 1, the diffuser 110 includes the speaker 112 at a position crossing the symmetry plane. More specifically, the diffuser 110 includes the speaker 112 at a position at which the center of a sound output surface thereof is located within the above-described symmetry plane.

The sound output surface of the speaker 112 faces a direction parallel to the XY plane within the above-described specific half space.

The speaker 112 according to this embodiment is a treble output speaker (tweeter) connected to an amplifier different from the above-described amplifier. However, the speaker 112 may be any other type of speaker (for example, mid-bass speaker, squawker, mid-high speaker, etc.).

Also, as illustrated in Fig. 4(b), two reflectors 111 are provided.

One reflector 111 of the two reflectors 111 reflects the sound emitted by the first speaker 120A inward of one quarter space of two quarter spaces obtained by dividing the aforementioned specific half space into two. In this case, the one quarter space represents a space composed of an almost unlimited number of coordinates in which the Y coordinate values and the Z coordinate values are positive in the aforementioned XYZ space coordinate system.

The other reflector 111 of the two reflectors 111 reflects the sound emitted by the second speaker 120B inward of the other quarter space of the two quarter spaces. In this case, the other quarter space represents a space composed of an almost unlimited number of coordinates in which the Y coordinate values are positive and the Z coordinate values are negative in the aforementioned XYZ space coordinate system.

In other words, a positive value and a negative value of Y-axis components (second-axis components) of normal vectors at any corresponding ones of all positions on all reflectors (two reflectors 111) of the diffuser 110 are the same. Specifically, the Y-axis component value of the normal vector at any position is a positive value.

### (Television Receiver)

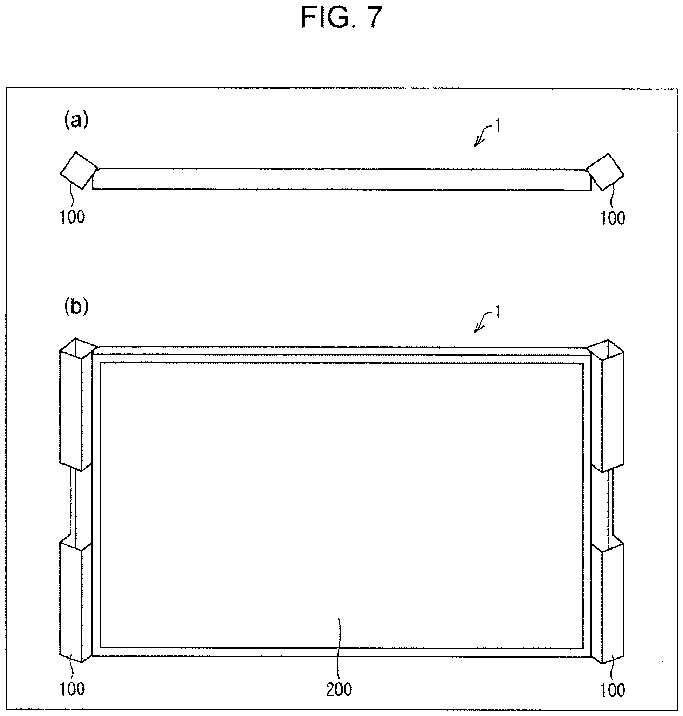

A television receiver (display device) provided with the speaker system 100 is described below with reference to Fig. 7.

Fig. 7 provides illustrations for explaining the positional relationship between two speaker systems 100 and a casing of a display panel 200 in such a television receiver 1.

Since Fig. 7 is an illustration for explaining the positional relationship, the appearance of the casing of the display panel 200 and the appearance of the speaker system 100 are not correctly illustrated. Also, Fig. 7 omits the illustration of the diffuser 110 and the speaker 120.

As illustrated in Fig. 7, the two speaker systems 100 are arranged at left and right of the casing of the display panel 200. Specifically, the two speaker systems 100 are arranged so that rear surfaces of the speaker systems 100 (a plane composed of rear surfaces of the two enclosure portions 130 and a wall surface of the coupling member 140) are flush with a rear surface of the casing of the display panel 200.

### (Advantages in Terms of Acoustics of Television Receiver 1)

Advantages in terms of acoustics of the television receiver 1 are described below.

Since the two speakers 120 are opposite speakers having sound output surfaces opposing to one another, an audience can hear the sound of a program with high sound quality at any position in the specific half space.

Also, as it is clear from the above description, since the speaker 112 is disposed in the diffuser 110, the audience senses the sound emitted by the two speakers 120 (the sound reflected by the diffuser 110) and the sound emitted by the speaker 112 in the same direction.

Hence, the audience can hear the sound of the program without feeling uncomfortable.

Further, as described above, the diffuser 110 reflects the sound emitted by the two speakers 120 inward of a specific half space (in a direction of a half space in which the audience of the program is present), but does not reflect the sound inward of the other half space (in a direction of a half space in which the audience of the program is not present). That is, the sound emitted by the two speakers 120 is not reflected to the rear surface side of the television receiver 1.

Also, as described above, the speaker system 100 is provided with the wall-shaped coupling member 140. The wall-shaped coupling member 140 prevents the sound emitted by the two speakers 120 from propagating to the rear surface side of the television receiver 1 due to a diffraction phenomenon.

Further, the structure in which the rear surface of the speaker system 100 (the rear surface of the wall-shaped coupling member 140) is flush with the rear surface of the casing of the display panel 200 also contributes to preventing the sound emitted by the two speakers 120 from propagating to the rear surface side of the television receiver 1.

Even in a case where the television receiver 1 is installed so that the rear surface of the television receiver 1 is close to a wall of a room, the sound emitted by the two speakers 120 unlikely enters the gap between the rear surface of the television receiver 1 and the wall of the room as described above. Hence, the sound of the program which the audience hears hardly becomes muffled sound.

Accordingly, the audience can hear the clear sound of the program with high sound quality at any position in the specific half space.

### (Advantages of Speaker System 100)

As it is clear from the above description, when the speaker system 100 is used as a component of the television receiver 1, the speaker device can attain an advantageous effect particularly in terms of acoustics.

Further, since the wall-shaped coupling member 140 and the diffuser 110 are arranged along the Z axis along which the two speakers 120 are disposed, the speaker system 100 having a shape whose longitudinal direction is the Z-axis direction also has an advantage of easily promoting a reduction in size (slimming down).

### (Appendix 1)

The display device according to the present invention is not limited to the television receiver 1. For example, the scope of the display device according to the present invention includes a display for a desktop PC having features similar to those of the television receiver 1.

### (Appendix 2)

The sound output surfaces of the two speakers 112 of the television receiver 1 may face in directions slightly inclined toward the display panel 200 side (for example, by 18°) from the normal direction of the display panel 200. Accordingly, an audience located at a position separated from the television receiver 1 by a distance considered as a typically appropriate distance in a direction of the front of the television receiver 1 (for example, a distance corresponding to three times the length in a vertical direction of a display screen) can hear clear treble sound.

### [Second Embodiment]

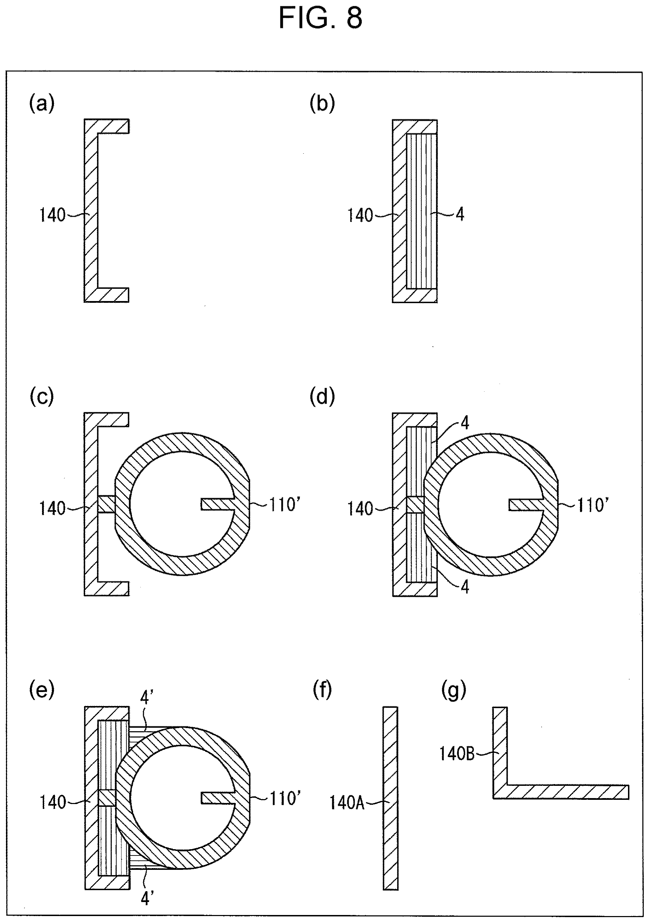

Another embodiment of the present invention is described below further with reference to Fig. 8. For the convenience of description, the same reference sign is applied to a member having the same function as that of the member described in the aforementioned embodiment and the description thereof is omitted.

Fig. 8 provides illustrations for explaining structures around diffusers in speaker systems according to various embodiments of the present invention.

Fig. 8(a) illustrates a cross section of a cut portion taken along line D-D' of the speaker system according to the first embodiment. Fig. 8(b) illustrates a cross section of a cut portion taken along line D-D' of the speaker system according to this embodiment.

A speaker system and a television receiver according to this embodiment differ from the speaker system 100 and the television receiver 1 according to the first embodiment for the following point.

That is, in the first embodiment, as illustrated in Fig. 8(a), a space (a space whose three sides (positive side in X-axis direction, negative side in X-axis direction, and negative side in Y-axis direction) of four sides (positive side in X-axis direction, negative side in X-axis direction, positive side in Y-axis direction, and negative side in Y-axis direction) perpendicular to Z axis) is present inside the angular C shape of the angular C-shaped coupling member 140. In contrast, in this embodiment, as illustrated in Fig. 8(b), the space inside the angular C shape of the coupling member 140 is filled with a filling member 4 (for example, plate) for eliminating the space.

Except for the above-described point, the speaker system and the television receiver according to this embodiment are similar to the speaker system 100 and the television receiver 1 according to the first embodiment.

Since the speaker system and the television receiver according to this embodiment include the filling member 4, a further advantageous effect of preventing a deterioration in sound quality which may occur when the sound emitted by the two speakers 120 enters the space inside the angular C shape of the coupling member 140 can be attained.

The filling member 4 is desirably made of a sound-absorbing material. If the filling member 4 is made of the sound-absorbing material, the filling member 4 absorbs the sound which is emitted by the two speakers 120 and which is going to propagate to the rear surface side of the television receiver 1. Accordingly, the sound of a program which the audience hears more hardly becomes muffled sound.

### [Third Embodiment]

Still another embodiment of the present invention is described below continuously with reference to Fig. 8 and with reference to other drawings. For the convenience of description, the same reference sign is applied to a member having the same function as that of the member described in any one of the aforementioned embodiments and the description thereof is omitted.

Fig. 8(c) to Fig. 8(e) each illustrate a cross section of cut portions of the coupling member 140 and a diffuser 110' (a cross section cut along a plane perpendicular to the longitudinal direction of the coupling member 140) according to this embodiment.

A speaker system and a television receiver according to this embodiment differ from the speaker system 100 and the television receiver 1 according to the first and second embodiments for the following point.

That is, in the first and second embodiments, as illustrated in Fig. 6(c) to Fig. 6(f), an outer edge (contour) of a cross section of the diffuser 110 cut along the XY plane has a shape approximate to a semicircular shape. In contrast, according to this embodiment, as illustrated in Fig. 8(c), an outer edge (contour) of a cross section of the diffuser 110' cut along a plane perpendicular to the longitudinal direction of the coupling member 140 has a circular shape.

In the speaker system and the television receiver according to this embodiment, the space inside the angular C shape of the coupling member 140 may not be filled with the filling member 4 for eliminating the space similarly to the first embodiment (that is, as illustrated in Fig. 8(c)). Alternatively, in the speaker system and the television receiver according to this embodiment, the space may be filled with the filling member 4 for eliminating the space similarly to the second embodiment (that is, as illustrated in Fig. 8(d)).

In the latter case, a deterioration in sound quality which may occur when the sound emitted by the two speakers 120 enters the space inside the angular C shape of the coupling member 140 does not occur.

As it is found in Fig. 8(d), in the speaker system and the television receiver in the latter case, a space whose three sides are surrounded by the coupling member 140 filled with the filling member 4 and the diffuser 110' and which is not viewed from the front of the speaker system is formed near each of the two speakers 120.

To avoid a deterioration in sound quality which may occur when the sound emitted by the two speakers 120 enters this space, as illustrated in Fig. 8(e), the space may be filled with another filling member 4' (for example, an additional member for eliminating the space may be applied to the diffuser 110').

### [Fourth Embodiment]

Other embodiments of the present invention are described below continuously with reference to Fig. 8.

Fig. 8(f) illustrates a cross section of a cut portion of the coupling member 140 (a cross section cut along a plane perpendicular to the longitudinal direction of the coupling member 140) according to an embodiment of the present invention. Fig. 8(g) illustrates a cross section of a cut portion of the coupling member 140 (a cross section cut along a plane perpendicular to the longitudinal direction of the coupling member 140) according to another embodiment of the present invention.

As it is found in Fig. 8(f) and Fig. 8(g), the wall-shaped coupling member is not limited to the angular C-shaped coupling member 140.

That is, the wall-shaped coupling member may be a coupling member 140A having an I-shaped cross section as illustrated in Fig. 8(f), or may be a coupling member 140B having an L-shaped cross section as illustrated in Fig. 8(g).

Also, the scope of a display device according to the present invention includes a television receiver including four speaker systems 100 and an extra-large display panel.
- A speaker system 100 provided at left of a display panel so that the longitudinal direction of the speaker system 100 is parallel to the up-down direction of the display panel and the height at one end of the speaker system 100 in the longitudinal direction is equal to the height at an upper end of the display panel (first speaker system 100)
- A speaker system 100 provided at left of the display panel so that the longitudinal direction of the speaker system 100 is parallel to the up-down direction of the display panel and the height at one end of the speaker system 100 in the longitudinal direction is equal to the height at a lower end of the display panel (second speaker system 100)
- A speaker system 100 provided at right of the display panel so that the longitudinal direction of the speaker system 100 is parallel to the up-down direction of the display panel and the height at one end of the speaker system 100 in the longitudinal direction is equal to the height at the upper end of the display panel (third speaker system 100)
- A speaker system 100 provided at right of the display panel so that the longitudinal direction of the speaker system 100 is parallel to the up-down direction of the display panel and the height at one end of the speaker system 100 in the longitudinal direction is equal to the height at the lower end of the display panel (fourth speaker system 100)

A sound output surface of each speaker 112 of the first speaker system 100 and the third speaker system 100 desirably faces inward of a half space composed of an almost unlimited number of coordinates in which the Z coordinate values are negative in the aforementioned XYZ space coordinate system (in a direction not parallel to the XY plane). A sound output surface of each speaker 112 of the second speaker system 100 and the fourth speaker system 100 desirably faces inward of the other half space (in a direction not parallel to the XY plane).

Even when the television receiver is used in an audiovisual environment in which audiences are present in a front direction, an elevation angle direction, and a depression angle direction with respect to the display panel, each audience can clearly hear the sound from the speaker 112.

Also, for a reason similar to the one described above, each of diffusers 110 of the four speaker systems 100 may be configured as follows.

That is, the diffusers 110 of the first speaker system 100 and the third speaker system 100 may be each formed in a manner that a reflector 111 at an upper side with respect to a plane parallel to the XY plane is inclined by a large amount and a reflector 111 at a lower side with respect to the plane parallel to the XY plane is inclined by a small amount.

In other words, the angle defined by the plane parallel to the XY plane and the upper reflector 111 may be large and the angle defined by the plane parallel to the XY plane and the lower reflector 111 may be small. For example, the former angle may be larger than 45° and the latter angle may be smaller than 45°.

Accordingly, the sound pressure level of the sound emitted by two speakers 120 of the first speaker system 100 and the sound emitted by two speakers 120 of the third speaker system 100 in a space located in the front direction or the depression angle direction of the display panel is increased.

Likewise, the diffusers 110 of the second speaker system 100 and the fourth speaker system 100 may be each formed in a manner that a reflector 111 at an upper side with respect to a plane parallel to the XY plane is inclined by a small amount and a reflector 111 at a lower side with respect to the plane is inclined by a large amount.

In other words, the angle defined by the plane parallel to the XY plane and the upper reflector 111 may be small and the angle defined by the plane parallel to the XY plane and the lower reflector 111 may be large. For example, the former angle may be smaller than 45° and the latter angle may be larger than 45°.

Accordingly, the sound pressure level of the sound emitted by two speakers 120 of the second speaker system 100 and the sound emitted by two speakers 120 of the fourth speaker system 100 in a space located in the front direction or the elevation angle direction of the display panel is increased.

### [Fifth Embodiment]

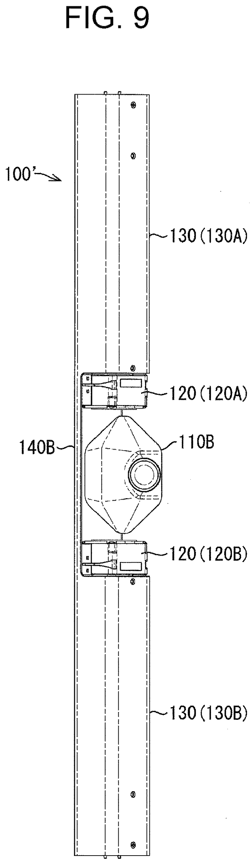

Other variations of a speaker system and a display device according to the present invention are described with reference to Fig. 9.

Fig. 9 is an illustration schematically illustrating the appearance of a speaker system 100' according to still another embodiment of the present invention.

The scope of the speaker system according to the present invention includes a speaker system including a diffuser having a desirable shape.

For example, the scope of the speaker system according to the present invention includes a speaker system illustrated in Fig. 9. That is, the scope of the speaker system according to the present invention includes the speaker system 100' including a diffuser 110B that reflects the sound emitted by a first speaker 120A and a second speaker 120B in all directions instead of inward of a specific half space.

Also, the scope of the display device according to the present invention includes a television receiver including the speaker system 100'.

While the diffuser including the speaker 112 is provided in the speaker system and the television receiver according to each of the embodiments, the present invention is not limited to such a configuration. That is, the diffuser not including the speaker 112 may be provided in the speaker system and the television receiver according to any one of the embodiments.

### [Sixth Embodiment]

Yet another embodiment of the present invention is described below. For the convenience of description, the same reference sign is applied to a member having the same function as that of the member described in each of the above-described embodiments and the description thereof is omitted.

### (Configuration of Speaker System)

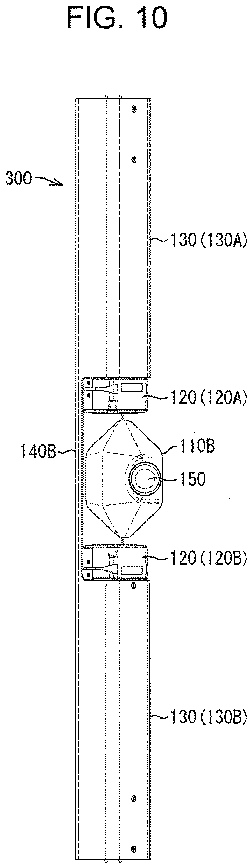

Fig. 10 is an illustration schematically illustrating the appearance of a speaker system according to yet another embodiment of the present invention. A speaker system 300 illustrated in Fig. 10 has almost the same appearance as that of the speaker system 100' illustrated in Fig. 9 according to the fifth embodiment. However, the speaker system 300 differs from the speaker system 100' in that a diffuser 110B includes a third speaker 150.

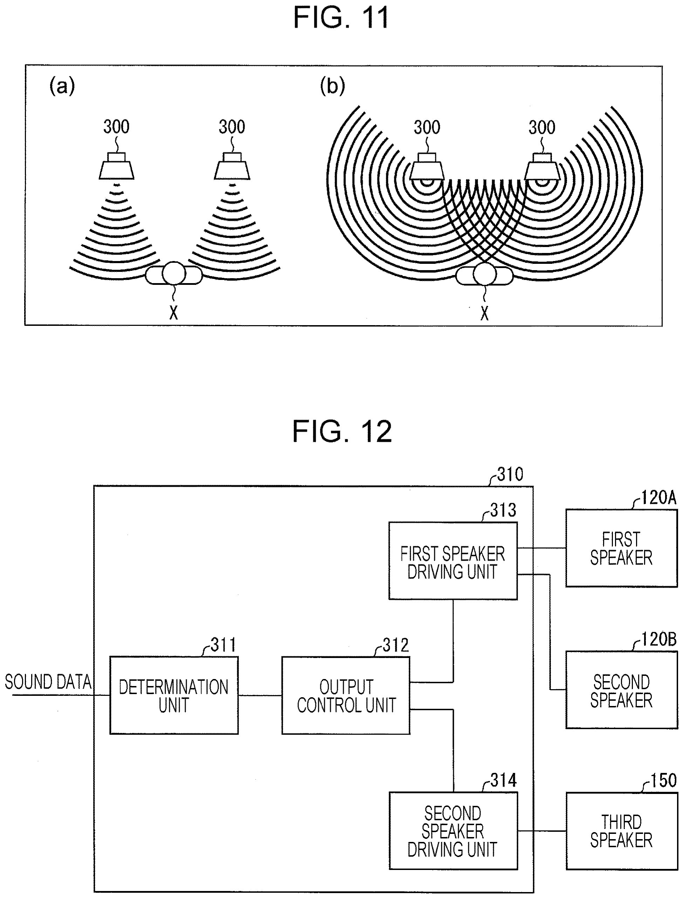

A first speaker 120A and a second speaker 120B are midrange-bass output speakers connected to an amplifier (first speaker driving unit 313, Fig. 12). The third speaker 150 is a midrange-treble output speaker connected to an amplifier (second speaker driving unit 314, Fig. 12) different from the amplifier connected to the first speaker 120A and the second speaker 120B.

In this embodiment, mid-bass speakers are used for the first speaker 120A and the second speaker 120B, and a squawker is used for the third speaker 150. The first speaker 120A and the second speaker 120B are not limited to the midrange-bass output speakers, and may be only required to be midrange-bass speakers having sound-field-focused directivity. Also, the third speaker 150 is not limited to the squawker, and may be only required to be a midrange-treble output speaker having sound-image-focused directivity.

In the speaker system 300, part of the sound range supported by the first speaker 120A and the second speaker 120B is lower than the sound range supported by the third speaker 150.

Since the sound emitted by the first speaker 120A and the second speaker 120B is reflected by the diffuser 110B in all directions, the sound is spread in the periphery including the space in which an audience is present.

In contrast, a sound output surface of the third speaker 150 is provided in the diffuser 110B to face the space in which the audience is present. Accordingly, the sound emitted by the third speaker 150 has high directivity and is directed in a direction in which the audience is present, and hence the audience can easily hear the sound. That is, the sound emitted by the third speaker 150 is sound in a mid-high sound range, and is sound in the same sound range as that of, for example, the voice of an announcer who reads news. Accordingly, the audience easily hears the voice of the announcer.

### (Directivity of Speaker System)

Fig. 11 is an illustration for explaining directivity of a speaker system. Fig. 11(a) illustrates sound-image-focused directivity, and Fig. 11(b) illustrates sound-field-focused directivity. In this case, the sound-image-focused directivity illustrated in Fig. 11(a) represents directivity of a typical speaker system. The sound-field-focused directivity illustrated in Fig. 11(b) represents directivity of the speaker system described in the first to fifth embodiments of the present invention.

Advantages and disadvantages of the sound-image-focused directivity and the sound-field-focused directivity are described below.

As illustrated in Fig. 11, a case is considered in which two speaker systems 300 are spaced apart at a predetermined arrangement interval, and an audience X is present at a position separated by a predetermined distance from the center position between the speaker systems 300.

First, regarding the sound-image-focused directivity, almost all sound of stereophonic sound Lch (left channel) reaches the left ear of the audience X and almost all stereophonic sound Rch (right channel) reaches the right ear of the audience X, when the stereophonic sound is output from the two speaker systems 300. As described above, the sound-image-focused directivity is suitable for a case where the voice of a person is major part of the sound, such as news, the sound which does not have to be widely spread. However, in a case of a live performance sound source or a movie, a spread of sound by a distance equal to or larger than the arrangement interval between the speaker systems 300 is not sufficiently obtained. If the audience X is shifted left or right even slightly from the hearing position, the sound on one side becomes dominant, and stereophonic feeling cannot be obtained.

In contrast, regarding the sound-field-focused directivity, the sound of both channels of the stereophonic sound output by the two speaker systems 300 reaches the left ear and right ear of the audience X. Since the sound of both channels reaches both ears of the audience as described above, a spread of sound by a distance equal to or larger than the arrangement interval between the speaker systems 300 can be obtained. Hence, the sound-field-focused directivity is suitable for hearing, for example, a live performance sound source or a movie which requires a spread of sound. Even when the audience X is slightly shifted left or right from the hearing position, the stereophonic feeling is not deteriorated. However, the sound is excessively spread, and it is difficult to hear the voice of a person. Hence, the sound-field-focused directivity is not suitable for the case where the voice of a person is major part of the sound, such as news.

That is, the sound-image-focused directivity and the sound-field-focused directivity have mutually contradictory advantages and disadvantages. Owing to this, the speaker system 300 according to this embodiment switches the directivity between the sound-image-focused directivity illustrated in Fig. 11(a) and the sound-field-focused directivity illustrated in Fig. 11(b), in accordance with the type of sound to be output, that is, a source (news, live performance, movie, etc.) of sound data to be output, so as to have advantages of both the sound-image-focused directivity and the sound-field-focused directivity. Hereinafter, the switching control between the sound-image-focused directivity and the sound-field-focused directivity in the speaker system 300 is described.

### (Driving Control of Speaker System)

Fig. 12 is a schematic block diagram of a driving control unit 310 that controls driving of the speaker system 300.

The driving control unit 310 includes a determination unit 311 that determines the type of sound (source of sound data) to be output by using input sound data; an output control unit 312 that controls the proportions of the output of the first speaker 120A and the second speaker 120B and the output of the third speaker 150; a first speaker driving unit 313 that provides an output corresponding to the proportion controlled by the output control unit 312 to the first speaker 120A and the second speaker 120B; and a second speaker driving unit 314 that provides an output corresponding to the proportion controlled by the output control unit 312 to the third speaker 150.

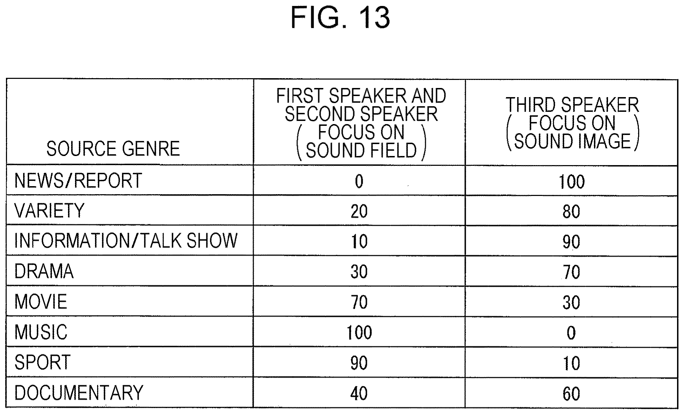

Fig. 13 is a table showing the relationship among the type of source (source genre) of the sound data, the output proportion of the first speaker and the second speaker, and the output proportion of the third speaker.

The output control unit 312 specifies the source genre of the sound data on the basis of the determination result from the determination unit 311, determines the output proportion of the first speaker and the second speaker and the output proportion of the third speaker on the basis of the specified source genre with reference to the table shown in Fig. 13, generates a control signal of the first speaker and the second speaker and a control signal of the third speaker on the basis of the determined output proportions, and outputs the control signals to the first speaker driving unit 313 and the second speaker driving unit 314.

The first speaker driving unit 313 drives the first speaker 120A and the second speaker 120B on the basis of the received control signal, and the second speaker driving unit 314 drives the third speaker 150 on the basis of the received control signal.

For example, if the source genre is news/report, as illustrated in Fig. 13, the output proportion of the first speaker and the second speaker is 0, and the output proportion of the third speaker is 100. In this case, since sound is not emitted from the first speaker and the second speaker, and sound is emitted only from the third speaker, the sound-image-focused directivity illustrated in Fig. 11(a) is provided, and the audience X can easily hear the voice of an announcer who reds news. In contrast, if the source genre is music, the output proportion of the first speaker and the second speaker is 100, and the output proportion of the third speaker is 0. In this case, since sound is emitted from only the first speaker and the second speaker, and sound is not emitted from the third speaker, the sound-field-focused directivity illustrated in Fig. 11(b) is provided, and the audience X can feel a spread of sound and can obtain the realism of a live performance.

Also, if the source genre is a variety, a spread of sound is required by a certain degree. Hence, the output proportion of the first speaker and the second speaker is 20, and the output proportion of the third speaker is 80. The sound-image-focused directivity illustrated in Fig. 11(a) is provided.

Further, if the source genre is a movie, a spread of sound is required, and hearing of voice is also required. Hence, the output proportion of the first speaker and the second speaker is 70, and the output proportion of the third speaker is 30. The sound-field-focused directivity illustrated in Fig. 11(a) is provided.

Likewise in other source genres, the directivity of the sound emitted by the speaker system 300 is determined on the basis of the predetermined output proportion of the first speaker and the second speaker and the predetermined output proportion of the third speaker.

As described above, in the speaker system 300, by distributing the output proportions of the speakers in accordance with the source genre by using the driving control unit 310, the sound-field-focused directivity and the sound-image-focused directivity can be selected. If a specified source genre is a source mainly containing voice, the output proportion of the third speaker is increased. If a specified source genre is a source for enjoying the realism, the output proportion of the first speaker and the second speaker is increased. Accordingly, the sound field and sound image suitable for the source genre can be obtained. The audience can hear the sound of any genre without feeling uncomfortable.

The distribution of the output proportions of the speakers in accordance with the source genre is not limited to the distribution automatically executed by the driving control unit 310, and may be distribution operated by a user (audience) by using an operation panel (not illustrated).

Also, in the speaker system 300 according to this embodiment, the diffuser 110B that reflects the sound emitted by the first speaker 120A and the second speaker 120B in all directions instead of reflecting the sound inward of the specific half space. However, it is not limited thereto. The diffuser 110 that reflects the sound inward of the specific half space used in the first embodiment and other embodiments may be used. In this case, the speaker 112 for treble output included in the diffuser 110 illustrated in Fig. 4 according to the first embodiment may be replaced with the third speaker 150 for midrange-treble output described in this embodiment.

### (Television Receiver)

The speaker system 300 according to this embodiment may be used as a speaker system of a television receiver by replacing the speaker system 300 with the speaker system 100 included in the television receiver (display device) illustrated in Fig. 7 of the first embodiment. In this case, the sound emitted from the speaker system 300 has directivity suitable for a source genre which the audience hears sound thereof by using the television receiver. Hence, the audience can hear the sound of any genre constantly without feeling uncomfortable.

While the wall-shaped coupling member is provided as the coupling member for coupling the first enclosure portion 130A with the second enclosure portion 130B in the speaker system and the television receiver according to each of the embodiments, the present invention is not limited to such a configuration. That is, the coupling member may be, for example, a long rod-shaped member having a circular cross section.

### [Summary]

A speaker system (speaker system 100) according to a first aspect of the present invention including a first speaker (first speaker 120A) having a sound output surface (sound output surface 121A), and a second speaker (second speaker 120B) having a sound output surface (sound output surface 121B), the sound output surfaces opposing to one another, includes a diffuser (diffuser 110) that is provided between the first speaker and the second speaker and that reflects sound emitted by the first speaker and the second speaker. The diffuser reflects the sound emitted by the first speaker and the second speaker, inward of a specific half space.

With the above-described configuration, since the opposite speakers of the speaker system emit the sound, the speaker system can form an optimal sound field in a wide range.

With the above-described configuration, the sound emitted by the first speaker and the second speaker is reflected inward of the specific half space; however, is not reflected inward of the other half space.

That is, when the speaker system is used as a television speaker system, if the speaker system is disposed so that the space in front of the television set is in the specific half space, and the space in rear of the television set is in the other half space, the sound emitted by the first speaker and the second speaker is not reflected to the rear surface side of the television set.

Accordingly, the speaker system has an advantage of "hardly causing a deterioration in sound quality which may occur when the sound propagates to the rear surface side of the television set even if the speaker system is used as a television speaker system."

Also, since the diffuser is disposed between the first speaker and the second speaker, the speaker system also has an advantage of "easily promoting a reduction in size (slimming down) as compared with a conventional speaker system."

In a speaker system according to a second aspect of the present invention, based on the first aspect, the first speaker, the second speaker, and the diffuser may be arranged side by side in a space expressed by a space coordinate system in which a first axis (Z axis), a second axis (Y axis), and a third axis (X axis) mutually orthogonal to one another are defined, along the first axis in the order of the first speaker, the diffuser, and the second speaker; and a positive value and a negative value of second-axis components of normal vectors at any corresponding ones of all positions on all reflectors of the diffuser may be the same.

In a speaker system according to a third aspect of the present invention, based on the second aspect, the diffuser may have a shape being symmetric (substantially or completely symmetric) with respect to a plane (XY plane) perpendicular to the first axis as a symmetry plane.

In this case, the specific half space represents one of two half spaces obtained by dividing the space (entire space) by a plane containing the first axis and the third axis, the one half space satisfying conditions as follows. When the values of second-axis components of normal vectors at all positions on all reflectors of the diffuser are positive: a half space composed of an almost unlimited number of coordinates in which the values of the second-axis components are positive.
When the values of second-axis components of normal vectors at all positions on all reflectors of the diffuser are negative: a half space composed of an almost unlimited number of coordinates in which the values of the second-axis components are negative.

With the above-described configuration, the sound-pressure distribution of the sound from the first speaker in one quarter space of two quarter spaces obtained by dividing the specific half space at the symmetry plane becomes equivalent to the sound-pressure distribution of the sound from the second speaker in the other quarter space of the two quarter spaces.

Accordingly, the speaker system attains a further advantageous effect of not giving the audience uncomfortable feeling by the sound emitted by the speaker system even when the audience stands up or sits down (that is, when the ears of the audience are moved from one quarter space (for example, a position lower than the symmetry surface) to the other quarter space (for example, a position higher than the symmetry plane).

A speaker system (speaker system 100) according to a fourth aspect of the present invention including a first speaker (first speaker 120A) having a sound output surface (sound output surface 121A), and a second speaker (second speaker 120B) having a sound output surface (sound output surface 121B), the sound output surfaces opposing to one another, includes a diffuser (diffuser 110) that reflects sound emitted by the first speaker and the second speaker. The first speaker, the second speaker, and the diffuser are arranged side by side in a space expressed by a space coordinate system in which a first axis (Z axis), a second axis (Y axis), and a third axis (X axis) mutually orthogonal to one another are defined, along the first axis in the order of the first speaker, the diffuser, and the second speaker. A positive value and a negative value of second-axis components of normal vectors at any corresponding ones of all positions on all reflectors of the diffuser are the same.

With the above-described configuration, the speaker system attains an advantageous effect similar to that of the speaker system according to the first aspect.

A display device (television receiver 1) according to a fifth aspect of the present invention includes the speaker system according to any one of the first to fourth aspects, and a display panel (display panel 200).

With the above-described configuration, the display device can form an optimal sound field in a wide range, easily promotes a reduction in size (reduction in thickness), and hardly causes a deterioration in sound quality which may occur when the sound propagates to the rear surface side of the display device.

A speaker system (speaker system 100, 300) according to a sixth aspect of the invention including a first speaker (first speaker 120A) having a sound output surface (sound output surface 121A), and a second speaker (second speaker 120B) having a sound output surface (sound output surface 121B), the sound output surfaces opposing to one another, includes a diffuser (diffuser 110, diffuser 110B) that is provided between the first speaker and the second speaker and that reflects sound emitted by the first speaker and the second speaker. The diffuser includes a third speaker (speaker 112, third speaker 150).

With the above-described configuration, since the diffuser reflects the sound emitted by the pair of opposite speakers (first speaker and second speaker), the audience senses the sound emitted by the pair of opposite speakers in a direction of the diffuser.

Also, since the diffuser includes the third speaker, the audience senses the sound emitted by the third speaker in the direction of the diffuser.

Then, the audience senses the sound emitted by the three speakers (speaker group) including the pair of opposite speakers in the same direction, and hence the audience does not receive "uncomfortable feeling which may arise when the audience hears high-directivity sound with the same content in different directions."

Accordingly, the speaker system attains an advantageous effect of allowing the audience to hear the sound emitted by the three speakers (speaker group) including the pair of opposite speakers without giving the audience uncomfortable feeling.

Since the diffuser is disposed between the first speaker and the second speaker, the speaker system also has an advantage of "easily promoting a reduction in size (slimming down) as compared with a conventional speaker system."

In a speaker system according to a seventh aspect of the present invention, based on the sixth aspect, part of a sound range supported by the first speaker (first speaker 120A) and the second speaker (second speaker 120B) is preferably lower than a sound range supported by the third speaker (third speaker 150).

With the above-described configuration, the speaker system attains a further advantageous effect of allowing an audience to hear sound in a midrange-treble sound range without giving the audience "uncomfortable feeling which may arise when the audience hears high-directivity sound with the same content in two different directions."

In a speaker system according to an eighth aspect of the present invention, based on the sixth or seventh aspect, the first speaker (first speaker 120A) and the second speaker (second speaker 120B) may be mid-bass speakers, and the third speaker (speaker 112) may be a tweeter.

With the above-described configuration, since the third speaker is the tweeter, the audience can hear particularly sound in a treble sound range without feeling uncomfortable.

In a speaker system according to a ninth aspect of the present invention, based on the sixth or seventh aspect, the first speaker (first speaker 120A) and the second speaker (second speaker 120B) may be mid-bass speakers, and the third speaker (third speaker 150) may be a squawker.

With the above-described configuration, since the third speaker is the squawker, the audience can hear particularly sound in a midrange-treble sound range without feeling uncomfortable. That is, the audience can hear the voice of a person without feeling uncomfortable.

In a speaker system according to a tenth aspect of the present invention, based on any one of the sixth to ninth aspects, the first speaker, the second speaker, and the diffuser may be arranged side by side in a space expressed by a space coordinate system in which a first axis (Z axis), a second axis (Y axis), and a third axis (X axis) mutually orthogonal to one another are defined, along the first axis in the order of the first speaker, the diffuser, and the second speaker; and the diffuser may have a shape being symmetric (substantially symmetric or completely symmetric) with respect to a plane (XY plane) perpendicular to the first axis as a symmetry plane.

With the above-described configuration, the sound-pressure distribution of the sound from the first speaker in one half space of two half spaces obtained by dividing the space (entire space) at the symmetry plane becomes equivalent to the sound-pressure distribution of the sound from the second speaker in the other half space of the two half spaces.

Accordingly, the speaker system attains a further advantageous effect of not giving the audience uncomfortable feeling by the sound emitted by the speaker system even when the audience stands up or sits down (that is, when the ears of the audience are moved from one half space (for example, a position lower than the symmetry surface) to the other half space (for example, a position higher than the symmetry plane).

In a speaker system according to an eleventh aspect of the present invention, based on the tenth aspect, the symmetry plane may be a plane at substantially equal distances (substantially or completely equal distances) from the sound output surface of the first speaker and from the sound output surface of the second speaker; and the diffuser may include the third speaker at a position crossing the symmetry plane.

With the above-described configuration, the speaker system attains a further advantageous effect of allowing the audience to hear the sound emitted by the third speaker further clearly.

A speaker system according to a twelfth aspect of the present invention, based on any one of the sixth to eleventh aspects, may further include a determination unit (determination unit 311) that determines a type of sound to be output; and an output control unit (output control unit 312) that controls a proportion of an output by the first speaker and the second speaker and a proportion of an output by the third speaker by using a determination result of the determination unit.

With the above-described configuration, the sound is emitted from the speaker system on the basis of the proportion of the output by the first speaker and the second speaker and the proportion of the output by the third speaker depending on the type of sound to be output. Accordingly, the audience can hear any type of sound (source genre) without feeling uncomfortable.

A display device (television receiver 1) according to a thirteenth aspect of the present invention includes the speaker system according to any one of the sixth to twelfth aspects, and a display panel (display panel 200).

With the above-configuration, the display device attains an advantageous effect of allowing the audience to hear the sound emitted by the speaker group including the pair of opposite speakers without giving the audience uncomfortable feeling, and an advantageous effect of easily promoting a reduction in size (reduction in thickness).

In a display device according to a fourteenth aspect of the present invention, based on the thirteenth aspect, the speaker system may be provided at each of left and right of the display panel; and, for each of the two speaker systems, a sound output surface of the third speaker included in the speaker system may face a direction inclined toward the display panel with respect to a normal direction of the display panel.

With the above-described configuration, the display device attains a further advantageous effect of allowing the audience in front of the display device to hear the sound emitted by the third speaker further clearly.

A speaker system (speaker system 100) according to a fifteenth aspect of the present invention includes a first speaker (first speaker 120A) having a sound output surface (sound output surface 121A), and a second speaker (second speaker 120B) having a sound output surface (sound output surface 121B), the sound output surfaces facing one another; and a wall-shaped coupling member (coupling member 140) that is provided between a first enclosure portion (first enclosure portion 130A) in which the first speaker is disposed and a second enclosure portion (second enclosure portion 130B) in which the second speaker is disposed and that couples the first enclosure portion with the second enclosure portion.

With the above-described configuration, since the opposite speakers of the speaker system emit the sound, the speaker system can form an optimal sound field in a wide range.

With the above-described configuration, the sound emitted by the first speaker and the second speaker unlikely propagates to the rear surface side of the wall-shaped coupling member that couples the first enclosure portion with the second enclosure portion (that is, the rear surface side of the speaker system).

Accordingly, the speaker system has an advantage of "hardly causing a deterioration in sound quality which may occur when the sound propagates to the rear surface side of the television set even if the speaker system is used as a television speaker system."

Also, since the wall-shaped coupling member is disposed between the first enclosure portion and the second enclosure portion, the speaker system also has an advantage of "easily promoting a reduction in size (slimming down) as compared with a conventional speaker system."

In a speaker system according to the sixteenth aspect of the present invention, based on the fifteenth aspect, the entirety or part of the coupling member may be made of a sound-absorbing material.

With the above-described configuration, the wall-shaped coupling member made of the sound-absorbing material absorbs the sound which is emitted by the first speaker and the second speaker and which is going to propagate to the rear surface side of the speaker system.

Accordingly, the speaker system has an advantage of "further hardly causing a deterioration in sound quality which may occur when the sound propagates to the rear surface side of the television set even if the speaker system is used as a television speaker system."

A speaker system according to a seventeenth aspect of the present invention, based on the fifteenth or sixteenth aspect, may further include a diffuser (diffuser 110) that is provided between the first speaker and the second speaker and that reflects sound emitted by the first speaker and the second speaker. The diffuser may be attached to the coupling member.

With the above-described configuration, the speaker system attains a further advantageous effect of allowing the audience to hear the sound emitted by the first speaker and the second speaker further clearly.

In a speaker system according to an eighteenth aspect of the present invention, based on the seventeenth aspect, the first speaker, the second speaker, and the diffuser may be arranged side by side in a space expressed by a space coordinate system in which a first axis (Z axis), a second axis (Y axis), and a third axis (X axis) mutually orthogonal to one another are defined, along the first axis in the order of the first speaker, the diffuser, and the second speaker; the wall-shaped coupling member may have formed therein a space whose three sides of four sides perpendicular to the first axis are surrounded by the coupling member; and the space may be filled with a filling member. The shape of the cross section of the wall-shaped coupling member perpendicular to the first axis may be an angular C shape (for example, when the shape of the speaker system is a long quadrangular prism), an arcuate shape (for example, when the shape of the speaker system is a long cylinder, or any of other shapes.

With the above-described configuration, the speaker system attains a further advantageous effect of preventing a deterioration in sound quality which may occur when the sound emitted by the first speaker and the second speaker enters the space.

In a speaker system according to a nineteenth aspect of the present invention, based on the eighteenth aspect, a space surrounded by the coupling member filled with the filling member and the diffuser may be filled with another filling member (filling member 4').

With the above-described configuration, for the display device, in the above-described configuration, the speaker system attains a further advantageous effect of preventing a deterioration in sound quality which may occur when the sound emitted by the first speaker and the second speaker enters the space.

A display device (television receiver 1) according to a twelfth aspect of the present invention includes the speaker system according to any one of the fifteenth to nineteenth aspects, and a display panel (display panel 200).

With the above-described configuration, the display device has advantages of forming an optimal sound field in a wide range, easily promoting a reduction in size (reduction in thickness), and hardly causing a deterioration in sound quality which may occur when the sound propagates to the rear surface side of the display device.

In a display device according to a twenty-first aspect of the present invention, based on the twentieth aspect, the speaker system may be arranged in the periphery of a casing of the display panel; and a wall surface of the coupling member may be flush with a rear surface of the casing.

With the above-described configuration, the sound emitted by the first speaker and the second speaker further unlikely propagates to the rear surface side of the display device.

Accordingly, the speaker system has an advantage of "further hardly causing a deterioration in sound quality which may occur when the sound propagates to the rear surface side of the television set even if the speaker system is used as a television speaker system."

The present invention is not limited to the above-described embodiments, various modifications can be made within the scope described in the claims, and an embodiment that can be obtained by appropriately combining technical means disclosed in the different embodiments is also included in the technical scope of the present invention. Further, a new technical feature can be formed by combining technical means disclosed in the respective embodiments.

### Reference Signs List

- 1: television receiver (display device)
- 100: speaker system
- 110: diffuser
- 111: reflector
- 112: speaker (third speaker, tweeter)
- 120A: first speaker (mid-bass speaker)
- 120B: second speaker (mid-bass speaker)
- 121A: sound output surface
- 121B: sound output surface
- 130: enclosure portion
- 140: coupling member
- 150: third speaker
- 200: display panel
- 300: speaker system
- 310: driving control unit
- 311: determination unit
- 312: output control unit

## Claims

1. A speaker system including a first speaker having a sound output surface, and a second speaker having a sound output surface, the sound output surfaces opposing to one another, comprising:
a diffuser that is provided between the first speaker and the second speaker and that reflects sound emitted by the first speaker and the second speaker,
wherein the diffuser reflects the sound emitted by the first speaker and the second speaker, inward of a specific half space.

2. The speaker system according to claim 1,
wherein the first speaker, the second speaker, and the diffuser are arranged side by side in a space expressed by a space coordinate system in which first, second, and third axes mutually orthogonal to one another are defined, along the first axis in the order of the first speaker, the diffuser, and the second speaker, and
wherein a positive value and a negative value of second-axis components of normal vectors at any corresponding ones of all positions on all reflectors of the diffuser are the same.

3. The speaker system according to claim 2, wherein the diffuser has a shape being symmetric with respect to a plane perpendicular to the first axis as a symmetry plane.

4. A speaker system including a first speaker having a sound output surface, and a second speaker having a sound output surface, the sound output surfaces opposing to one another, comprising:
a diffuser that reflects sound emitted by the first speaker and the second speaker,
wherein the first speaker, the second speaker, and the diffuser are arranged side by side in a space expressed by a space coordinate system in which first, second, and third axes mutually orthogonal to one another are defined, along the first axis in the order of the first speaker, the diffuser, and the second speaker, and
wherein a positive value and a negative value of second-axis components of normal vectors at any corresponding ones of all positions on all reflectors of the diffuser are the same.

5. A display device comprising the speaker system according to any one of claims 1 to 4, and a display panel.

6. A speaker system including a first speaker having a sound output surface, and a second speaker having a sound output surface, the sound output surfaces opposing to one another, comprising:
a diffuser that is provided between the first speaker and the second speaker and that reflects sound emitted by the first speaker and the second speaker,
wherein the diffuser includes a third speaker.

7. The speaker system according to claim 6, wherein part of a sound range supported by the first speaker and the second speaker is lower than a sound range supported by the third speaker.

8. The speaker system according to claim 6 or 7, wherein the first speaker and the second speaker are mid-bass speakers, and the third speaker is a tweeter.

9. The speaker system according to claim 6 or 7, wherein the first speaker and the second speaker are mid-bass speakers, and the third speaker is a squawker.

10. The speaker system according to any one of claims 6 to 9,
wherein the first speaker, the second speaker, and the diffuser are arranged side by side in a space expressed by a space coordinate system in which first, second, and third axes mutually orthogonal to one another are defined, along the first axis in the order of the first speaker, the diffuser, and the second speaker, and
wherein the diffuser has a shape being symmetric with respect to a plane perpendicular to the first axis as a symmetry plane.

11. The speaker system according to claim 10,
wherein the symmetry plane is a plane at substantially equal distances from the sound output surface of the first speaker and from the sound output surface of the second speaker, and
wherein the diffuser includes the third speaker at a position crossing the symmetry plane.

12. The speaker system according to any one of claims 6 to 11, further comprising:
a determination unit that determines a type of sound to be output; and
an output control unit that controls a proportion of an output by the first speaker and the second speaker and a proportion of an output by the third speaker by using a determination result of the determination unit.

13. A display device comprising the speaker system according to any one of claims 6 to 12, and a display panel.

14. The display device according to claim 13,
wherein the speaker system is provided at each of left and right of the display panel, and
wherein, for each of the two speaker systems, a sound output surface of the third speaker included in the speaker system faces a direction inclined toward the display panel with respect to a normal direction of the display panel.

15. A speaker system comprising:
a first speaker having a sound output surface, and a second speaker having a sound output surface opposing to one another; and
a wall-shaped coupling member that is provided between a first enclosure portion in which the first speaker is disposed and a second enclosure portion in which the second speaker is disposed and that couples the first enclosure portion with the second enclosure portion.

16. The speaker system according to claim 15, wherein the entirety or part of the coupling member is made of a sound-absorbing material.

17. The speaker system according to claim 15 or 16, further comprising:
a diffuser that is provided between the first speaker and the second speaker and that reflects sound emitted by the first speaker and the second speaker,
wherein the diffuser is attached to the coupling member.

18. The speaker system according to claim 17,
wherein the first speaker, the second speaker, and the diffuser are arranged side by side in a space expressed by a space coordinate system in which first, second, and third axes mutually orthogonal to one another are defined, along the first axis in the order of the first speaker, the diffuser, and the second speaker,
wherein the wall-shaped coupling member has formed therein a space whose three sides of four sides perpendicular to the first axis are surrounded by the coupling member, and
wherein the space is filled with a filling member.

19. The speaker system according to claim 18, wherein a space surrounded by the coupling member filled with the filling member and the diffuser is filled with another filling member.

20. A display device comprising the speaker system according to any one of claims 15 to 19, and a display panel.

21. The display device according to claim 20,
wherein the speaker system is arranged in the periphery of a casing of the display panel, and
wherein a wall surface of the coupling member is flush with a rear surface of the casing.

22. A television receiver comprising the display device according to any one of claims 5, 13, 14, 20, and 21.
